(19) **Europäisches Patentamt**

**European Patent Office**

**Office européen des brevets**

(11) **EP 0 759 411 B1**

(12) **EUROPÄISCHE PATENTSCHRIFT**

(45) Veröffentlichungstag und Bekanntmachung des Hinweises auf die Patenterteilung:
**19.04.2000 Patentblatt 2000/16**

(51) Int Cl.7: **C02F 1/72**

(21) Anmeldenummer: **96111272.9**

(22) Anmeldetag: **12.07.1996**

(54) **Verfahren zur oxidativen Behandlung einer Sulfite enthaltenden wässrigen Lösung**

Oxydation process of an aqueous solution containing a sulphite

Procédé pour oxyder une solution aqueuse contenant un sulfite

(84) Benannte Vertragsstaaten:
**AT DE GB**

(30) Priorität: **22.08.1995 DE 19530772**

(43) Veröffentlichungstag der Anmeldung:
**26.02.1997 Patentblatt 1997/09**

(73) Patentinhaber: **Metallgesellschaft Aktiengesellschaft
60325 Frankfurt am Main (DE)**

(72) Erfinder:
• **Neumann, Ullrich, Dr.
67663 Kaiserslautern (DE)**
• **Willing, Wolfgang, Dr.
61206 Wöllstadt (DE)**
• **Meyer, Andreas, Dr.
99099 Erfurt (DE)**
• **Schümann, Olaf, Dr.
99094 Erfurt (DE)**
• **Wildner, Knut
04838 Eilenburg (DE)**
• **Thiele, Wolfgang, Dr.
04838 Eilenburg (DE)**

(56) Entgegenhaltungen:
**EP-A- 0 068 458**

**Beschreibung**

Die Erfindung betrifft ein Verfahren zum oxidativen Behandeln eines Abwassers aus einer Rauchgas-Entschwefelungsanlage, welches pro Liter mindestens 30 g Schwefel-Sauerstoff-Verbindungen, insbesondere Sulfite, enthält, durch Zugabe von Peroxodisulfat. Bei den Sulfiten handelt es sich neben $M_2SO_3$ z. B. auch um Hydrogensulfite ($MHSO_3$) und Pyrosulfite ($M_2S_2O_5$), sowie bei den S-O-Verbindungen z. B. um Thiosulfate ($M_2S_2O_3$) und Dithionite ($M_2S_2O_6$).

Aus EP-A-0 068 458 ist es bekannt, einem Abwasser-Hauptstrom u. a. $H_2O_2$ zuzugeben und in einem kleinen Meßstrom durch Dosieren von Peroxodisulfat die nötige Menge an $H_2O_2$ zu ermitteln. Aus DE-B-25 34 892 ist es bekannt, Abwässer mit Sauerstoff zu behandeln und dabei Sulfide und Sulfite in Sulfat umzuwandeln. Hierbei arbeitet man zweistufig und erzeugt zunächst bei pH-Werten über 7 mit technisch reinem Sauerstoff Thiosulfat, das dann bei pH-Werten von 0 bis 3 und bei Temperaturen zwischen 70 und 150°C ebenfalls mit technisch reinem Sauerstoff in Gegenwart von eisenhaltigen Katalysatoren vollständig zu Sulfat umgesetzt wird. Bei einem ähnlichen, in DE-A-23 35 520 beschriebenen Verfahren wird das Abwasser mit Ozon behandelt.

Der Erfindung liegt die Aufgabe zugrunde, die oxidative Behandlung des eingangs genannten Abwassers großtechnisch auf einfache und wirkungsvolle Weise durchzuführen. Dabei sollen insbesondere Abwässer mit hoher Salzkonzentration auf kostengünstige Weise behandelt werden. Erfindungsgemäß gelingt dies dadurch, daß man das Abwasser in einer Reaktionszone bei einem pH-Wert von höchstens 5 mit Natriumperoxodisulfat ($Na_2S_2O_8$) in überstöchiometrischer Menge zum Erzeugen von Sulfat versetzt, wobei man die Temperatur in der Reaktionszone im Bereich von 40 bis 100°C hält und wobei man gasförmiges $SO_2$ durch Einleiten von Strippgas aus dem Abwasser austreibt, daß man und aus der Reaktionszone eine sulfathaltige Salzlösung abzieht, deren Gehalt an oxidierbaren Schwefel-Sauerstoff-Verbindungen höchstens noch 20 Gew.-% des Gehalts an oxidierbaren Schwefel-Sauerstoff-Verbindungen im Abwasser vor der Zugabe des Natriumperoxodisulfats beträgt, und daß man die sulfathaltige Salzlösung mindestens teilweise in eine Elektrolyse leitet, in welcher man Natriumperoxodisulfat erzeugt, welches man in die Reaktionszone leitet. In oxidierbaren Schwefel-Sauerstoff-Verbindungen hat der Schwefel eine Wertigkeit kleiner 6.

Das durch das erfindungsgemäße Verfahren zu behandelnde Abwasser kann neben den Schwefel-Sauerstoff-Verbindungen auch noch Kohlenstoffverbindungen sowie Amido- und Imido-Verbindungen enthalten. Der Gehalt des Abwassers an Schwefel-Sauerstoff-Verbindungen wird üblicherweise mindestens 100 g/l betragen. Das stark oxidierend wirkende Natriumperoxodisulfat, das leicht zu handhaben und gut zu dosieren ist, wandelt die S-O-Verbindungen zu Sulfat und die Kohlenstoffverbindungen zu $CO_2$ um, wodurch umweltfreundliche Produkte entstehen. Das Natriumperoxodisulfat hat die Struktur

$$NaO_3S\text{-}O\text{-}O\text{-}SO_3Na.$$

Natriumperoxodisulfat setzt sich z. B. mit Natriumsulfit in folgender Weise um:

$$Na_2S_2O_8 + Na_2SO_3 + H_2O \rightarrow 2\,Na_2SO_4 + H_2SO_4.$$

Es empfiehlt sich, die Umsetzung der Lösung mit Natriumperoxodisulfat bei Temperaturen von mindestens 60°C durchzuführen, ebenso ist es zweckmäßig, den pH-Wert in der Reaktionszone bei höchstens 4 zu halten.

Es ist wichtig, daß man in der Reaktionszone oder vorher gasförmiges $SO_2$ aus der wäßrigen Lösung austreibt. Hierbei leitet man unterstützend ein Strippgas durch das Abwasser, z. B. Luft oder Inertgas oder auch Wasserdampf. Ausgetriebenes $SO_2$ verringert den Verbrauch an Oxidationsmittel in der Reaktionszone. Gleichzeitig kann dieses $SO_2$ aufgefangen und z. B. zu Schwefelsäure weiterverarbeitet werden.

Die aus der Reaktionszone kommende sulfathaltige Salzlösung findet mindestens teilweise in einer Elektrolyse zum Erzeugen von Natriumperoxodisulfat Verwendung. Die restliche sulfathaltige Salzlösung, die noch einen gewissen Gehalt an Natriumperoxodisulfat aufweist, wird zweckmäßigerweise in eine Nachreaktionszone geleitet. Dort kann man unter Zuführen von Energie in Form von ultraviolettem Licht, Mikrowellen oder Ultraschall eine nahezu reine Natrium-Sulfatlösung erzeugen, die ohne Schwierigkeiten umweltverträglich beseitigt werden kann.

Beim Verfahren der Erfindung ist es von Vorteil, daß man das Oxidationsmittel in Form einer Lösung zugibt, die einfach dosierbar ist. Gleichzeitig vermeidet man das Entstehen von $H_2S$ und Schwefel-Ausfällungen. Das Verfahren ist deshalb besonders zum großtechnischen Aufarbeiten von sulfithaltigen Abwässern aus Rauchgas-Entschwefelungsanlagen geeignet.

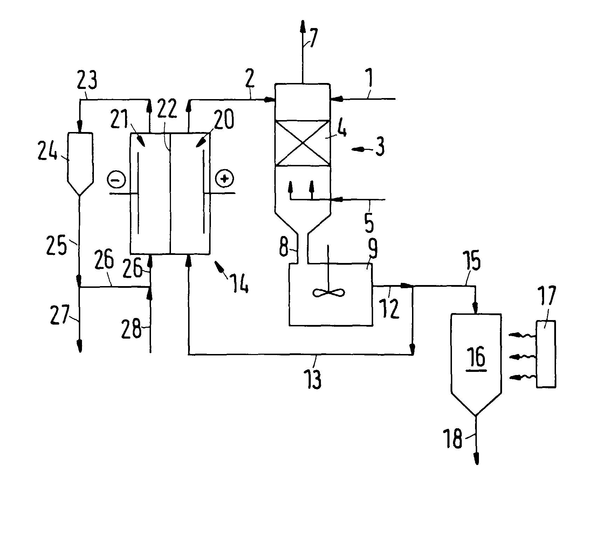

Ausgestaltungsmöglichkeiten des Verfahrens werden mit Hilfe der Zeichnung erläutert. Die Zeichnung zeigt ein Fließschema des Verfahrens.

Das zu behandelnde Abwasser, das erhebliche Mengen an Schwefel-Sauerstoff-Verbindungen enthält, wird in der Leitung (1) herangeführt und zusammen mit einer Natriumperoxodisulfat-Lösung aus der Leitung (2) einer Strippkolonne (3) aufgegeben. Die Kolonne (3) enthält eine Schicht (4) aus Füllkörpern, um den Gas-Flüssigkeits-Kontakt zu intensivieren. In den unteren Bereich der Kolonne (3) wird durch die Leitung (5) ein gas- oder dampfförmiges Strippmedium, z. B. Luft, eingeleitet. Auf diese Weise wird aus dem herabrieselnden Flüssigkeitsgemisch $SO_2$ abgetrieben, das in der Leitung (7) abgezogen wird.

Die Natriumperoxodisulfat enthaltende Lösung gelangt durch den Kanal (8) in die Reaktionszone (9), wo die oxidative Behandlung unter Rühren bei Temperaturen im Bereich von 40 bis 100°C und vorzugsweise mindestens 60°C fortgesetzt und intensiviert wird. In der Reaktionszone (9), die auch mehrstufig ausgebildet sein kann, werden Verweilzeiten von üblicherweise mindestens 1 Stunde und zumeist 2 bis 4 Stunden angestrebt. Man erhält schließlich eine sulfathaltige Salzlösung, die in der Leitung (12) abgezogen wird. Diese Salzlösung weist einen Gehalt an oxidierbaren Schwefel-Sauerstoff-Verbindungen auf, der höchstens noch 20 Gew.-% des Gehalts an oxidierbaren Schwefel-Sauerstoff-Verbindungen in der Lösung der Leitung (1) beträgt. Üblicherweise ist der Gehalt an oxidierbaren Schwefel-Sauerstoff-Verbindungen in der Leitung (12) auf höchstens noch 15 Gew.-% des Anfangsgehalts in der Leitung (1) gesunken. Gleichzeitig enthält die Salzlösung der Leitung (12) noch restliches Natriumperoxodisulfat.

Einen Teilstrom der sulfathaltigen Salzlösung der Leitung (12) zieht man in der Leitung (13) ab und führt ihn zu einer Elektrolyse (14). Die restliche Lösung wird durch die Leitung (15) zur Nachreaktion in einen Behälter (16) geleitet. Zum Beschleunigen der Reaktion führt man dem Behälter (16) Energie in Form von ultraviolettem Licht, Mikrowellen oder Ultraschall aus einer Anlage (17) zu. Bei der Verwendung von UV-Licht arbeitet man mit Wellenlängen unterhalb von 400 nm, wie sie z.B. durch einen Quecksilber-Mitteldruckstrahler oder -Niederdruckstrahler erzeugt werden. Aus dem Behälter (16) zieht man schließlich durch die Leitung (18) eine Sulfatlösung ab, deren Gehalt an oxidierbaren S-O-Verbindungen höchstens noch 10 Gew.-% des entsprechenden Gehalts in der Lösung der Leitung (1) beträgt.

Die Elektrolyse (14) erzeugt die Natriumperoxodisulfat-Lösung, die durch die Leitung (2) in die Kolonne (3) gegeben wird. Zu diesem Zweck führt man die sulfathaltige Salzlösung der Leitung (13) in die Anodenkammer (20), die von der Kathodenkammer (21) durch eine Kationenaustauscher-Membran (22) getrennt ist. Diese Membran (22) ist für die in der Kammer (20) vorhandenen Natriumionen durchlässig, die auf diesem Weg in die Kathodenkammer (21) gelangen. In der Kathodenkammer (21) entsteht eine NaOH-Lösung, die man in der Leitung (23) abzieht, zu einem Sammelbehälter (24) führt und durch die Leitungen (25) und (26) teilweise zurück in die Kammer (21) leitet. Ein Überschuß der NaOH-Lösung wird in der Leitung (27) abgezogen und Wasser wird in der Leitung (23) herangeführt.

**Beispiel**

Im Labormaßstab wird der Zeichnung entsprechend gearbeitet, wobei aber die Herstellung des Natriumperoxodisulfats nicht direkt mit der oxidativen Behandlung einer Sulfite enthaltenden Mutterlauge gekoppelt ist. Die Mutterlauge kommt aus einer Rauchgaswäsche nach dem Wellmann-Lord-Verfahren, sie ist eine wäßrige Lösung und enthält die folgenden S-O-Verbindungen:

| Natriumsulfit | $Na_2SO_3$ | 4,2 Gew.-% |
|---|---|---|
| Natriumdisulfit | $Na_2S_2O_5$ | 31,0 Gew.-% |
| Natriumsulfat | $Na_2SO_4$ | 3,6 Gew.-% |
| Natriumthiosulfat | $Na_2S_2O_3$ | 2,0 Gew.-% |
| Natriumdithionit | $Na_2S_2O_6$ | 3,1 Gew.-% |
| Natriumamidosulfat | $NH_2SO_3Na$ | 0,2 Gew.-% |
| Natriumimidosulfat | $NH(SO_3Na)_2$ | 1,7 Gew.-% |

Außerdem enthält die Mutterlauge noch 0,3 Gew.-% an organisch gebundenem Kohlenstoff. Pro Stunde werden 2 l Mutterlauge durch die Leitung (1) der Strippkolonne (3) zugeführt, wobei man gleichzeitig durch die Leitung (2) 1 Liter/h einer 20 %igen Natriumperoxodisulfat-Lösung zugibt. Die Temperatur sowohl im Rührreaktor (9) als auch in der Kolonne (3) liegt bei 95°C. Mittels Luft werden in der Kolonne (3) 20 g/h $SO_2$ ausgestrippt.

Nach einer Verweilzeit von 2 h im Reaktor (9), in welchem der pH-Wert bei 2,5 liegt, zieht man in der Leitung (12) eine Sulfatlösung ab, die neben 22,8 Gew.-% $Na_2SO_4$ nur noch 0,3 Gew.-% $Na_2S_2O_6$ enthält; die übrigen der oben genannten S-O-Verbindungen sind praktisch verschwunden. In der Lösung der Leitung (12) finden sich ferner 0,2 Gew.-% an organisch gebundenem Kohlenstoff und 3 Gew.-% Natriumperoxodisulfat. Anschließend durchläuft diese Lösung einen UV-Reaktor der Firma UMEX, Erfurt, Typ ABOX MS 6-1 mit einer Nennleistung von 6 kW und einem bestrahlten Volumen von 1,2 l. Der Reaktor weist ein Rohr auf, durch welches die Lösung fließt, wobei sie von außen gleichzeitig rundum bestrahlt wird. Die bestrahlte Lösung ist eine praktisch reine Natriumsulfatlösung mit 25 Gew.-% $Na_2SO_4$, der Gehalt an organisch gebundenem Kohlenstoff liegt bei 12 ppm.

Zur elektrolytischen Erzeugung von Natriumperoxodisulfat verwendet man eine Sulfatlösung, welche der der Leitung (12) ähnlich ist. Die Elektrolyse ist vom Filterpressentyp mit Nafion (von DuPont) als Membran (22). Das Kathodenmaterial ist Edelstahlblech und die Anode ist eine Platinfolie. Zwei Einzelzellen sind bipolar zusammengeschaltet, die Zellenspannung beträgt 6,5 V, die Kathode jeder Zelle hat eine wirksame Fläche von 1000 cm$^2$ und die Anode von 300 cm$^2$. Die beiden Anodenkammern (20) werden nacheinander von Anolyten durchströmt, wobei die der zuerst durchströmten Kammer zugeführte wäßrige Lösung pro Liter 320 g Natriumsulfat, 98 g Schwefelsäure und 0,5 g Natriumthiocyanat enthält. 5,5 l/h dieser Lösung werden durch die Anodenkammern geleitet; die abgezogene Anolytlösung enthält pro Liter 182 g Natriumperoxodisulfat und 63 g Schwefelsäure, sie ist für das Einleiten durch die Leitung (2) in die Strippkolonne (3) geeignet.

Die Kathodenkammern (21) der beiden Zellen werden parallel von einem im Kreislauf geführten alkalischen Elektrolyten durchströmt. Durch Zudosieren von Wasser wird eine NaOH-Konzentration von 200 g/l aufrechterhalten, ein Teilstrom dieser Natronlauge wird durch die Leitung (27) abgezogen.

## Patentansprüche

1. Verfahren zum oxidativen Behandeln eines Abwassers aus einer Rauchgas-Entschwefelungsanlage, welches pro Liter mindestens 30 g Schwefel-Sauerstoff-Verbindungen, insbesondere Sulfite, enthält, durch Zugabe von Peroxodisulfat, dadurch gekennzeichnet, daß man das Abwasser in einer Reaktionszone bei einem pH-Wert von höchstens 5 mit Natriumperoxodisulfat ($Na_2S_2O_8$) in überstöchiometrischer Menge zum Erzeugen von Sulfat versetzt, wobei man die Temperatur in der Reaktionszone im Bereich von 40 bis 100°C hält und wobei man gasförmiges $SO_2$ durch Einleiten von Strippgas aus dem Abwasser austreibt, daß man aus der Reaktionszone eine sulfathaltige Salzlösung abzieht, deren Gehalt an oxidierbaren Schwefel-Sauerstoff-Verbindungen höchstens noch 20 Gew.-% des Gehalts an oxidierbaren Schwefel-Sauerstoff-Verbindungen im Abwasser vor der Zugabe des Natriumperoxodisulfats beträgt, und daß man die sulfathaltige Salzlösung mindestens teilweise in eine Elektrolyse leitet, in welcher man Natriumperoxodisulfat erzeugt, welches man in die Reaktionszone leitet.

2. Verfahren nach Anspruch 1, dadurch gekennzeichnet, daß man den pH-Wert in der Reaktionszone bei höchstens 4 hält.

3. Verfahren nach Anspruch 1 oder 2, dadurch gekennzeichnet, daß man einen Teilstrom der aus der Reaktionszone abgezogenen sulfathaltigen Salzlösung, die restliches Natriumperoxodisulfat enthält, in eine Nachreaktionszone leitet, wobei man unter Zuführen von Energie in Form von ultraviolettem Licht, Mikrowellen oder Ultraschall eine Natrium-Sulfatlösung erzeugt, deren Gehalt an oxidierbaren Schwefel-Sauerstoff-Verbindungen höchstens 10 Gew.-% des Gehalts an oxidierbaren Schwefel-Sauerstoff-Verbindungen in dem der Reaktionszone zugeführten Abwasser beträgt.

## Claims

1. A process for the oxidative treatment of waste water from a flue-gas desulphurisation plant which contains at least 30 g sulphur-oxygen compounds, in particular sulphites, per litre, by the addition of peroxodisulphate, characterised in that sodium peroxodisulphate ($Na_2S_2O_8$) is added to the waste water in a hyperstoichiometric quantity in a reaction zone at a pH value of at most 5 to produce sulphate, the temperature in the reaction zone being kept in the range from 40 to 100°C and gaseous $SO_2$ is expelled from the waste water by introduction of stripping gas, that a sulphate-containing salt solution is withdrawn from the reaction zone, in said salt solution the content of oxidisable sulphur-oxygen compounds is at most 20% by weight of the content of oxidisable sulphur-oxygen compounds in the waste water before the addition of the sodium peroxodisulphate, and that the sulphate-containing salt solution is passed at least in part into an electrolysis stage in which sodium peroxodisulphate is produced which is passed into the reaction zone.

2. A process according to Claim 1, characterised in that the pH value in the reaction zone is kept at at most 4.

3. A process according to Claim 1 or 2, characterised in that a partial stream of the sulphate-containing salt solution withdrawn from the reaction zone, which partial stream contains residual sodium peroxodisulphate, is passed into a subsequent reaction zone, wherein, with energy being supplied in the form of ultraviolet light, microwaves or ultrasound, a sodium sulphate solution is produced, the content of oxidisable sulphur-oxygen compounds of which is at most 10% by weight of the content of oxidisable sulphur-oxygen compounds in the waste water supplied to the reaction zone.

**Revendications**

1. Procédé de traitement oxydant d'une eau résiduaire provenant d'une installation de désulfuration d'un gaz de fumée, qui renferme par litre au moins 30 g de composés à base de soufre et d'oxygène, notamment de sulfites, par addition de perdisulfate, caractérisé en ce qu'il consiste à mélanger l'eau résiduaire dans une zone de réaction, à un pH de 5 au plus, à du perdisulfate de sodium ($Na_2S_2O_8$) en une quantité hyperstoechiométrique pour produire du sulfate, la température dans la zone de réaction étant maintenue entre 40 et 100°C, et du $SO_2$ gazeux étant extrait de l'eau résiduaire par envoi de gaz d'entraînement, à soutirer de la zone de réaction une solution de sel contenant du sulfate, dont la teneur en des composés oxydables à base de soufre et d'oxygène, représente au plus 20 % en poids de la teneur en composés oxydables à base de soufre et d'oxygène de l'eau résiduaire avant l'addition du perdisulfate de sodium, et à envoyer la solution de sel contenant du sulfate au moins en partie à une électrolyse, dans laquelle on produit du perdisulfate de sodium que l'on envoie à la zone de réaction.

2. Procédé suivant la revendication 1, caractérisé en ce qu'il consiste à maintenir le pH dans la zone de réaction à 4 au plus.

3. Procédé suivant la revendication 1 ou 2, caractérisé en ce qu'il consiste à envoyer un courant partiel de la solution de sel renfermant du sulfate soutirée de la zone de réaction et qui renferme le perdisulfate de sodium restant à une zone de post-réaction, en produisant par apport d'énergie sous forme de lumière ultraviolette, de micro-ondes ou d'ultrasons, une solution de sulfate de sodium, dont la teneur en des composés oxydables à base de soufre et d'oxygène représente au plus 10 % en poids de la teneur en composés oxydables à base de soufre et d'oxygène de l'eau résiduaire envoyée à la zone de réaction.